# EUROPEAN PATENT APPLICATION

(11) **EP 3 842 776 A1**
(43) Date of publication of application: **30.06.2021**
(21) Application number: 19383208.6
(22) Date of filing: 27.12.2019
(51) Int. Cl.: G01K 11/32, G01L 1/24, G01K 1/14, G01M 5/00, F16L 9/02, F16L 9/12, F16L 11/127

(54) **ASSEMBLY FOR MONITORING THE TEMPERATURE AND STRAIN OF A PIPE**

(71) Applicant: Tubacex Innovación A.I.E., 48160 Derio - Vizcaya (ES); Tecnalia Research & Innovation, 20009 Donostia-San Sebastian (ES)
(72) Inventor: Herrero, Diego, 48160 Vizcaya (ES); Brizuela, Marta, 20009 Donostia-San Sebastián - Gipuzkoa (ES); Domínguez, Santiago, 20009 Donostia-San Sebastián - Gipuzkoa (ES); Baptiste Jorcin, Jean, 20009 Donostia-San Sebastián - Gipuzkoa (ES)
(74) Representative: Balder IP Law, S.L.

(57) **Abstract**

The invention refers to an assembly for monitoring at least one of the temperature and the strain of a pipe. The assembly comprises at least one optical fiber, each optical fiber comprising at least one Fiber Bragg Grating (FBG) sensor for monitoring the at least one parameter and a coupling device couplable to an inner surface of the pipe. The coupling device has a first surface that is configured to be in direct contact with the fluid and a second surface comprising at least one longitudinal channel to house the at least one optical fiber. The second surface is configured to be in direct contact with the inner surface of the pipe and to be isolated from the fluid.

## Description

### TECHNICAL FIELD

In general, the present invention relates to a sensing apparatus for monitoring different parameters of pipes, and more particularly, to a sensing assembly for monitoring parameters of pipes, such as temperature and strain, by means of fiber Bragg grating sensors integrated into optical fibers located inside the pipes. With the measure of the temperature of the pipe, the temperature of the fluid flowing therein can be derived.

### STATE OF THE ART

Fiber Bragg Grating (FBG) sensors (hereinafter interchangeably referred to as either FBG sensors or fiber Bragg grating sensors) have attracted considerable interest in sensing temperature and strain on optical fibers, due to the intrinsic nature and wavelength-encoded operation of FBG sensors. Such sensors can be used to control materials and processes. Each FBG sensor has a characteristic Bragg wavelength (and corresponding characteristic Bragg frequency) and only reflects light having a wavelength approximately equal to that Bragg wavelength. Strain and temperature on a FBG sensor produce a wavelength shift in the light reflected by the FBG sensor by stretching the grating, and hence lengthening the spacing between grating. Therefore, any change in the strain and/or the temperature of the FBG sensor, and thus, of the object being monitored by the FBG sensor, modifies the spacing between grating, also modifying the Bragg wavelength of the FBG sensor. These changes can be sensed by monitoring the wavelength shift of the reflected light. Temperature and strain measurements using FBG sensors is an absolute measurement. There is always a unique relationship between wavelength and temperature and strain, respectively.

Fiber Bragg gratings sensors can then be used as direct sensing elements for strain and temperature.

These FBG sensors offer a significant advantage over traditional electronic gauges used for these applications in that they are less sensitive to vibration or heat and consequently are far more reliable. Moreover, FBG sensors have, due to their small size and volume, a fast response time which is needed for the measurement of fast temperature or strain changes. FBG sensors can become read out over large distances, without the need of amplification means under way (>20km). Due to the nature of the glass, FBG based temperature sensors show a good corrosion resistance. FBG sensors are immune to electromagnetic interference (even lightening interference). FBG sensors are intrinsically passive (no electrical power required) and therefore can be positioned in high voltage and potentially explosive atmosphere areas. Due to the low thermal conductivity of the lead-in fiber (glass), FBG based temperature sensors have no significant influence on the distortion of the thermal distribution profile to be measured. Moreover, it is possible to have various FBG sensors along a single optical fiber, each of them having a well-known location on the fiber and prepared in such way that the wavelength working windows are not interfering from one to another (e.g.: sensor1 placed at x1 on the fiber with an associated wavelength working range (λ1, λ1+ε1), sensor2 placed at x2 on the fiber with an associated wavelength working range (λ2, λ2+ε2 with |λ2- λ1| >> ε1), etc.

For some industry sectors, e.g., the energy sector that works with flammable and/or explosive substances such as natural gas, liquefied natural gas or other petroleum products, the chemistry sector that works with aggressive and dangerous chemical compounds, the heat exchanger assets that normally works with aggressive fluids such as condensed acids, among others, having an updated status of the pipeline network through which the respective substances are transported and distributed is a key aspect. Generally, the temperature and strain of the pipes through which said substances are transported has been monitored using sensors externally coupled to the transport and distribution pipes. These solutions measure the temperature and strain on a surface of the pipe that is not in direct contact with the fluid flowing through the pipe and thus, the measures obtained cannot be considered as reliable but just indicative. Furthermore, the introduction of devices for measuring different parameters of the fluids flowing through the pipes or the pipes themselves could generate instabilities and turbulences into the fluid flow that could generate risk situations like, for example, premature wearing or breaks in the pipes, measure errors, etc.

Therefore, there is still the need in the state of the art of a solution that allows measuring the temperature and strain of the pipes transporting fluids from the inside of the pipes that overcomes the problems explained above.

### DESCRIPTION OF THE INVENTION

The present invention provides a solution that integrates optical fibers with FBG sensors in tubes or pipes for real time monitoring of parameters of interest, such as temperature or strain. The real time monitoring of such parameters may be used to obtaining indirect measures of parameters of the substances flowing through the tube or pipe. For example, the temperature of a fluid flowing through the pipe may be obtained based on the temperature of the pipe. Moreover, such real time monitoring may be used to optimize the operation of a process or to assess the integrity (or degradation status) of an asset in which such tubes or pipes are used (e.g. a heat exchanger). For example, the detection of a change in the temperature or the strain of the pipe may indicate the break or a damage in the pipe.

As used herein, the pipe or tube may refer to a tubular section or hollow cylinder, usually but not necessarily of circular cross-section, used mainly to convey substances which can flow. As used herein, the term "fluid" may refer to liquid, gases, slurries or even powders which behave as a fluid.

A first object of the invention is an assembly for monitoring at least one of the temperature and the strain of the pipe the assembly is coupled to. The assembly comprises at least one optical fiber, each optical fiber comprising at least one Fiber Bragg Grating (FBG) sensor for monitoring the at least one parameter. For example, the assembly may comprise one single optical fiber for measuring one of the parameters or may comprise more than one optical fiber for measuring different parameters or for redundantly measure the same parameter. Furthermore, each one of the optical fibers may comprise one or more FBG sensors to redundantly measure the same parameter. The redundant measure of the same parameter carried out with redundant optical fibers or with redundant FBG sensors significantly increase reliability of the measures obtained by the assembly. In addition, said redundant optical fiber and FBG sensors ensure that if some of them break the rest of optical fibres and FBG sensors can keep measuring the parameters of interests. In addition, using optical fiber with a plurality of FBG sensor located, e.g., at different point along the length of the optical fiber allow measuring the same parameter in different points of the pipe. For example, if several of the FBG sensors located on the same optical fiber provide different measurements of the same parameter and the difference between these measurements exceeds a predetermined threshold, this could indicate the existence of a leakage, any kind of damage or even a break in the pipe.

The assembly also comprises a coupling device couplable to an inner surface of the pipe. The coupling device may be tightly linked to an inner surface of the pipe. For example, the coupling device may be glued to the inner surface, attached by a magnetic system, etc. The coupling device has a first surface that is configured to be in direct contact with the fluid and a second surface comprising at least one longitudinal channel to house the at least one optical fiber. This second surface is configured to be in direct contact with the inner surface of the pipe and to be isolated from the fluid. Since the second surface is isolated from the fluid, the longitudinal channel, and thus, the at least one optical fiber (or the portion of optical fiber) housed therein, is also isolated. The coupling device may be a solid piece or a hollow piece, in whose interior the magnets of the magnetic system may be housed. Alternatively, the coupling device may have holes a plurality of magnets of the magnetic system may be housed.

The assembly described herein ensures that the optical fibers stay in place and are not affected by any fluid movement that may occur in the pipe (if these conditions are not fulfilled the measurement of the FBG sensors would be a combination of temperature and strain effect that would distort the measurement result). Moreover, this assembly provides reliable measurements since the optical fiber with the FBG sensors are located inside the pipe and in close proximity to the fluid.

In some embodiments, the at least one parameter of the fluid that is being monitored by the FBG sensors of the optical fibers is the temperature of the pipe, the strain of the pipe or any combination thereof. Each optical fiber is configured to monitor the temperature or the strain of the pipe.

In some embodiment, the longitudinal channel has a square cross-section. This particular cross-section facilitates the insertion of the optical fiber though it.

In some embodiments, the area of the cross-section of the longitudinal channel is slightly bigger than the sum of the cross-section areas of the optical fibers housed in said longitudinal channel. For example, the cross-section of the longitudinal channel may be 1.2 times the sum of the cross-section areas of the optical fibers housed therein. This ensure that optical fibers housed in the longitudinal channel are in close proximity to the inner surface of the pipe such that that the FBG sensors inscribed is said optical fibers are able to measure the temperature and/or the strain of the pipe.

In some embodiments, the assembly comprises at least one first optical fiber with at least one FBG sensor for measuring the temperature of the pipe and at least one second optical fiber with at least one another FBG sensor for measuring the strain of the pipe. Besides, the coupling device comprises at least one longitudinal channel to house the at least one first optical fiber and the at least one second optical fiber. For example, the coupling device may comprise one longitudinal channel to house all the optical fibers of the assembly, independently of the parameter being measured by each optical fiber. Alternatively, the coupling device may comprise one longitudinal channel for housing a different optical fiber or one longitudinal channel for housing the one or more (redundant) optical fibers measuring the temperature and another longitudinal channel for housing the one or more (redundant) optical fibers measuring the strain. In some other embodiments, any other number of longitudinal channels and combinations of optical fibers housed in said longitudinal channels may be used.

In some embodiments, the at least one optical fiber is in direct contact with the inner surface of the pipe. In particular, the optical fibers measuring the strain of the pipe are in direct contact with the inner surface of the pipe while the optical fibers for measuring the temperature of the pipe may be in direct contact (thermal conduction) or may not be in direct contact and indirectly measure the temperature (thermal convection).

In some embodiments the pipe is a metallic pipe, e.g., stainless steel pipe, cooper pipe, galvanized iron pipe, black iron pipe, etc. In such embodiments, the means for attaching the coupling device to the inner surface of the pipe may be magnets located in the coupling device. In any case, the pipe may be made of any other material, such as PVC (Poly-Vinyl Chloride), CPVC (Chlorinated Poly-Vinyl Chloride), PEX (Cross-linked Polyethylene), etc.

In some embodiments, the coupling device is made of Teflon or of the same material than the pipe the coupling device is coupled to. Coupling devices made of Teflon are preferred since this material is chemically inert (not affected by aggressive and corrosive fluids) and can withstand temperatures from -150°C to 250°C.

In some embodiments, the coupling device is a longitudinal coupling frame with a circular segment cross-section, more particularly with a minor circular segment cross-section, along the length of the pipe. In such embodiments, the first surface of the coupling frame being a substantially flat surface along the length of the coupling frame and the second surface having a curvature that substantially correspond to the curvature of the inner surface of the pipe. The coupling frame has the at least one longitudinal channel located in the centre of the second surface. The thickness of the coupling frame will be as thin as possible provided that it is enough to incorporate the longitudinal channels without compromising the structural integrity of the coupling frame. For example, the maximum thickness of the coupling frame may be 1.5 times a diameter of the at least one optical fiber. This minimizes the section of the pipe that is occupied by the coupling frame reducing the interferences and turbulences generated in the fluid when collision against the coupling frame.

In some other embodiments, the coupling device, instead of a longitudinal coupling frame, is a coupling pipe insertable into the pipe. The coupling pipe has an outer diameter substantially equal to the inner diameter of the pipe and the same curvature. In such embodiments, the outer surface of the coupling pipe comprises the at least one longitudinal channel to house the at least one optical fiber. For example, the coupling pipe may comprise a plurality of longitudinal channels partially or totally surrounding its perimeter. In such embodiments, the longitudinal channels and the optical fibers remain sandwiched between the pipe (outer wall) and the coupling pipe (inner wall).

In some embodiments, the at least one longitudinal channel is machined on the outer surface of the coupling pipe.

A second object of the present invention is a pipe that comprises the assembly for monitoring at least one of the temperature and strain of the pipe. The assembly comprises at least one optical fiber, each optical fiber comprising at least one FBG sensor for monitoring the temperature and strain. The assembly also comprises the coupling frame, as previously disclosed, whose second surface is attached to the inner surface of the pipe. For example, the coupling frame may be glued to the inner surface, attached by a magnetic system, etc. In any case, the coupling frame is maintained in place by the friction forces between the two surfaces in contact. The first surface of the coupling frame is configured to be in direct contact with the fluid and the second surface comprises the at least one longitudinal channel to house the at least one optical fiber. Since the second surface is attached to the inner surface of the pipe it is also isolated from the fluid.

In some embodiments, this pipe may be a pipe of a heat exchanger.

A third object of the present invention is another pipe that comprises the assembly for monitoring at least one of the temperature and strain of the pipe. The assembly comprises at least one optical fiber, each optical fiber comprising at least one FBG sensor for monitoring the temperature and strain. The assembly also comprises the coupling pipe, as previously described, that is inserted into the pipe and whose second surface (outer surface) is attached to the inner surface of the pipe. For example, the coupling frame may be glued to the inner surface, attached by a magnetic system, etc. In any case, the coupling frame is maintained in place by the friction forces between the two surfaces in contact.

In some embodiments, this another pipe may be a pipe of a heat exchanger.

The assembly for monitoring the at least one of the temperature and strain of a pipe herein described present several advantages and/or differences compared with previous devices and techniques. In particular, it is provided a measurement of temperature and/or strain in various points inside the pipe with a very limited impact on the fluid flow. This is particularly important for heat exchanger assets where the usual fabrication process does not allow the installation of classical sensors on the outer face of the tubes.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Figure 1 shows a perspective view of a pipe including an assembly, that comprises one optical fiber and a coupling frame, for monitoring at least one of the temperature and the strain of the pipe, according to a particular embodiment of the invention.
Figure 2 shows different views of the coupling frame of figure 1.
Figure 3 shows a perspective view of a pipe including an assembly, that comprises one optical fiber and a coupling pipe, for monitoring at least one of the temperature and the strain of the pipe, according to a particular embodiment of the invention.

### DETAILED DESCRIPTION OF THE INVENTION

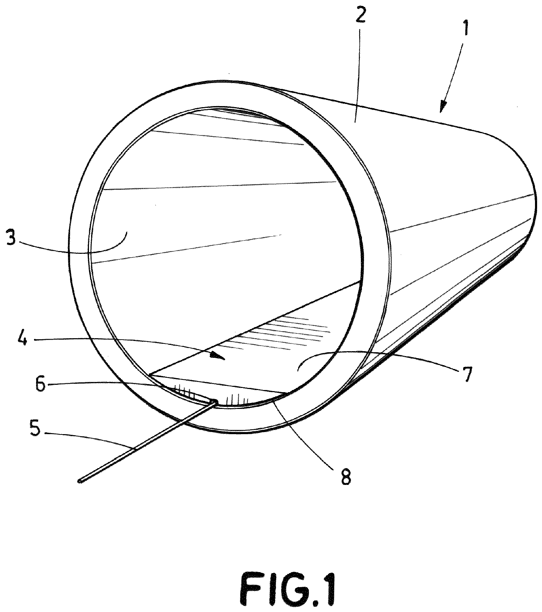

Figure 1 shows a perspective view of a pipe 1 including an assembly, that comprises one optical fiber 5 and a coupling frame 4, for monitoring at least one of the temperature and the strain of the pipe 1, according to a particular embodiment of the invention. It should be understood that the pipe 1 of Figure 1 may include additional components and that some of the components described herein may be removed and/or modified without departing from a scope of the described pipe 1. Additionally, implementation of the pipe 1 is not limited to such embodiment.

The assembly comprises one optical fiber 5, the optical fiber comprising a plurality of redundant FBG sensors (not shown in this figure) for monitoring the temperature of the pipe 1. This pipe defines an outer surface 2 and an inner surface and is configured to transport a fluid (not shown in this figure). The assembly also comprises the coupling frame 4 whose second surface 8 is attached to the inner surface 3 of the pipe 1. For example, the coupling frame 4 may be glued to the inner surface 3. In any case, the coupling frame is maintained in place by the friction forces between the two surfaces 3,8 in contact. The first surface 7 of the coupling frame 4 is substantially planar and is configured to be in direct contact with the fluid. The second surface 8 comprises the longitudinal channel 6 that houses the optical fiber 5. The second surface 8, the longitudinal channel 6 and the optical fiber 5 are isolated from the fluid.

While figure 1 shows one single optical fiber housed in one single longitudinal channel, the coupling frame may comprise a different number of longitudinal channels located in correspondence with the second surface, each longitudinal channel housing the same or a different number of optical fibers. All the fibers housed in the longitudinal channel will have at least one FBG sensor for measuring the temperature or the strain of the pipe. Those optical fibers having more than one FBG sensor inscribed along its length will be able to measure the temperature or the strain in points of the pipe in correspondence with the location of the FBG sensors.

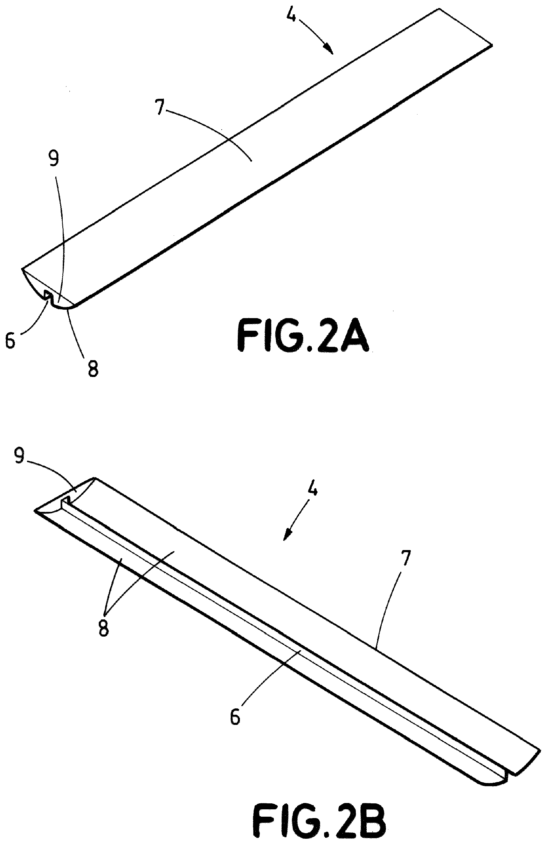

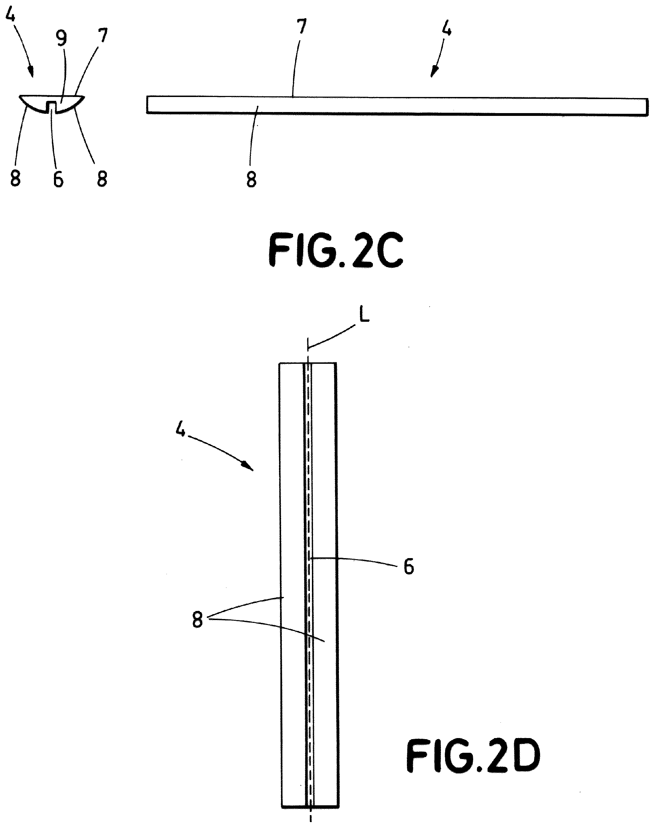

Figure 2 shows different views of the coupling frame of figure 1. In particular, Figure 2A shows an upper perspective view of the coupling frame, Figure 2B shows a lower perspective view of the coupling frame, Figure 2C shows respective front and side view of the coupling frame and Figure 2D shows a plant view of the coupling frame.

The coupling frame 4 is a longitudinal piece with a circular segment cross-section 9 along the length of the pipe 1. The first surface 7 of the coupling frame 4 is substantially flat along its length. The second surface 8 has a curvature that substantially corresponds to the curvature of the inner surface 3 of the pipe1. The longitudinal channel 6 has a square cross-section and is located in the centre of the second surface 8 and along its longitudinal axis (L). The thickness of the coupling frame will be about 1.5 times the diameter of the optical fiber 5. In turn, the depth and the width of the square cross-section longitudinal channel will be about 1.2 the diameter of the optical fiber 5. This facilitates the introduction of the fiber 5 into the longitudinal channel 6 and ensures that the optical fiber 5 will be contacting the inner surface 3 of the tube 1 in order to guarantee a correct measure of the temperature and strain by the FBG sensors.

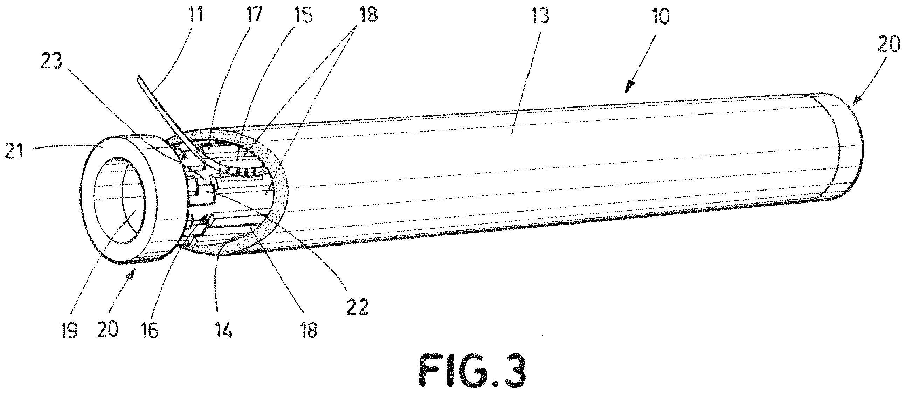

Figure 3 shows a perspective view of a pipe 10 including an assembly, that comprises one optical fiber 11 and a coupling pipe 12, for monitoring at least one of the temperature and the strain of the pipe 10, according to a particular embodiment of the invention. It should be understood that the pipe 10 with the assembly of Figure 3 may include additional components and that some of the components described herein may be removed and/or modified without departing from a scope of the described pipe 1. Additionally, implementation of the pipe 1 is not limited to such embodiment.

The pipe defines an outer surface 2 and an inner surface and is configured to transport a fluid (not shown in this figure). The assembly comprises one optical fiber 11, each optical fiber comprising at least one FBG sensor 15 for monitoring the temperature or the strain. The assembly also comprises the coupling pipe 16 that is inserted into the pipe 10 and whose second surface 17 (outer surface) is attached to the inner surface 14 of the pipe 10. For example, the second surface 17 of the coupling pipe 16 may be glued to the inner surface 14 of the pipe 10. The coupling pipe is maintained in place by the friction forces between the two surfaces 14,17 in contact.

Therefore, the coupling pipe 16 has an outer diameter substantially equal to the inner diameter of the pipe 10 and the same curvature. In addition, the outer surface 17 of the coupling pipe 16 comprises a plurality of longitudinal channels 18 machined on the second surface 17 and located equally spaced around its entire outer perimeter to house the optical fibers 11. The machined longitudinal channels 18 define a plurality of longitudinal protrusions with a frustoconical cross-section and with a length corresponding substantially similar to the length so the coupling pipe 16. The upper surface of these longitudinal protrusions determines the second surface 17 of the coupling pipe 16.

In this example, only one optical fiber 11 is housed in one of the longitudinal channels 18, but more optical fibers may be housed in the same longitudinal channel or in others longitudinal channels. In this way, the longitudinal channels and the optical fibers remain sandwiched between the pipe 10 (outer wall) and the coupling pipe 16 (inner wall). The coupling pipe 16 also defines a first surface 19 (inner surface) whose diameter is less that the diameter of the inner surface 14 of the pipe 10 and through which the fluid flows through.

The assembly further comprises an end piece 20 attached qt both ends. The end piece 20 comprises a tube section 21 having an inner diameter that substantially corresponds to the inner diameter of the coupling pipe 16 and an outer diameter that substantially corresponds to the outer diameter of the pipe 10. The end piece 20 also comprises a plurality of L-shaped tooth 22 (the L-shaped tooth 21 having a straight portion coupled to the tube section 21 and a transversal portion laterally protruding from one of the sides of the free end of the straight portion) located equally spaced along the perimeter of the inner surface of the tube section 21. The L-shaped teeth are firstly inserted into the corresponding machined channels 18 of the coupling pipe 16 and then the end piece 20 is turned such that the transversal portions of the L-shaped tooth 22 are inserted in respective machined spaces 23 in the longitudinal protrusions of the coupling pipe 16. In this way, the end portions 20 remain attached to the ends of the coupling pipe 16. These end pieces 20 are configured to prevent the fluid from entering the channels 18 (this may cause a problem with corrosion of the metal pipe or damage to the optical fibre 11) and allow for proper output (curve radius) of the optical fiber 11 from the channels 18.

In this text, the term "comprises" and its derivations (such as "comprising", etc.) should not be understood in an excluding sense, that is, these terms should not be interpreted as excluding the possibility that what is described and defined may include further elements, steps, etc. The term "another," as used herein, is defined as at least a second or more. The term "coupled," as used herein, is defined as connected, whether directly without any intervening elements or indirectly with at least one intervening elements, unless otherwise indicated. Two elements can be coupled mechanically, electrically, or communicatively linked through a communication channel, pathway, network, or system.

The invention is obviously not limited to the specific embodiments described herein, but also encompasses any variations that may be considered by any person skilled in the art (for example, as regards the choice of materials, dimensions, components, configuration, etc.), within the general scope of the invention as defined in the claims.

## Claims

1. An assembly for monitoring at least one of a temperature and a strain of a pipe, **characterized in that** the assembly comprises:
at least one optical fiber (5,11), each optical fiber (5,11) comprising at least one Fiber Bragg Grating (FBG) sensor (15) for monitoring the at least one of the temperature and the strain of the pipe (1,10);
a coupling device (4,16) couplable to an inner surface (3,14) of the pipe (1,10), wherein the coupling device (4,16) has a first surface (7,19) being configured to be in direct contact with the fluid and a second surface (8,17) comprising at least one longitudinal channel (6,18) to house the at least one optical fiber (5,11), the second surface (8,17) being configured to be in direct contact with the inner surface (3,14) of the pipe (1,10) and to be isolated from the fluid.

2. The assembly according to claim 1, comprising at least one first optical fiber (5,11) with at least one FBG sensor (15) for measuring the temperature of the pipe (1,10) and at least one second optical fiber (5,11) with at least one another FBG sensor (15) for measuring the strain of the fluid and wherein the coupling device (4,16) comprises at least one longitudinal channel (6,18) to house the at least one first optical fiber (5,11) and the at least one second optical fiber (5,11).

3. The assembly according to claim 1 or 2, wherein the at least one optical fiber (5,11) is in contact with the inner surface (3,14) of the pipe (1,10).

4. The assembly according to any one of the preceding claims, wherein the pipe (1,10) is a metallic pipe.

5. The assembly according to any one of the preceding claims, wherein the coupling device (4,16) is made of Teflon or of the same material than the pipe (1,10).

6. The assembly according to any one of the preceding claims, wherein the at least one longitudinal channel (6,18) has a square cross-section.

7. The assembly according to any one of the preceding claims, wherein the FBG sensors (15) are located at different points along a length of the optical fibers (5,11).

8. The assembly according to any one of the preceding claims, wherein the coupling device is a longitudinal coupling frame (4) with a circular segment cross-section along the length of the pipe (1), the first surface (7) of the coupling frame (4) being a substantially flat surface along the length of the coupling frame (4) and the second surface (8) having a curvature that substantially correspond to the curvature of the inner surface (3) of the pipe (1), and wherein the coupling frame (4) has the at least one longitudinal channel (6) located in the centre of the second surface (8).

9. The assembly according to claim 8, wherein the maximum thickness of the coupling frame (4) is 1.5 times a diameter of the at least one optical fiber (5).

10. The assembly according to any one of claims 1 to 7, wherein the coupling device is a coupling pipe (16) insertable into the pipe (10), the coupling pipe (16) having an outer diameter substantially equal to the inner diameter of the pipe (10) and the same curvature, and wherein the outer surface (17) of the coupling pipe (16) comprises the at least one longitudinal channel (18) to house the at least one optical fiber (11).

11. The assembly according to claim 10, wherein the at least one longitudinal channel (18) is machined on the outer surface (17) of the coupling pipe (16).

12. A pipe (1) comprising the assembly for monitoring at least one parameter of a fluid flowing through the pipe (1) as described in any of claims 8 or 9, the second surface (8) of the coupling frame (4) being attached to the inner surface (3) of the pipe (1).

13. A pipe (10) comprising the assembly for monitoring at least one parameter of a fluid flowing through the pipe (10) as described in any of claims 10 or 11, wherein the coupling pipe (16) is inserted into the pipe (10).
